(19) Europäisches Patentamt
European Patent Office
Office européen des brevets

(11) **EP 4 606 650 A1**

(12) **EUROPEAN PATENT APPLICATION**
published in accordance with Art. 153(4) EPC

(43) Date of publication:
**27.08.2025 Bulletin 2025/35**

(21) Application number: 23892880.8

(22) Date of filing: **08.02.2023**

(51) International Patent Classification (IPC):
*B60R 11/04* (2006.01)        *H05B 3/86* (2006.01)
*B60R 13/02* (2006.01)        *H04N 23/50* (2023.01)

(52) Cooperative Patent Classification (CPC):
**B60R 11/04; B60R 13/02; H04N 23/50; H05B 3/86**

(86) International application number:
**PCT/CN2023/074962**

(87) International publication number:
**WO 2024/108770 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.11.2022 CN 202211452509**

(71) Applicant: **Fuyao Glass Industry Group Co., Ltd.
Fuqing, Fujian 350300 (CN)**

(72) Inventors:
• **CHEN, Xiaonan
Fuqing, Fujian 350300 (CN)**

• **CHEN, An
Fuqing, Fujian 350300 (CN)**
• **YANG, Renyi
Fuqing, Fujian 350300 (CN)**
• **ZENG, Yanfen
Fuqing, Fujian 350300 (CN)**
• **YE, Mingming
Fuqing, Fujian 350300 (CN)**
• **LIAO, Fan
Fuqing, Fujian 350300 (CN)**

(74) Representative: **Herrero & Asociados, S.L.
Cedaceros, 1
28014 Madrid (ES)**

(54) **AUTOMOBILE PILLAR ASSEMBLY AND VEHICLE**

(57)    An automobile pillar assembly, comprising a decorative panel (11), a camera (12) and a heating unit (13). The decorative panel (11) has a see-through area (111) and a heating area (112), wherein light can penetrate the see-through area (111). The camera (12) is arranged corresponding to the see-through area (111), and the camera (12) can capture, through the see-through area (111), an image located on the side of the see-through area (111) facing away from the camera (12). The heating unit (13) is located in the heating area (112), and heat generated by the heating unit (13) can be transferred from the heating area (112) to the see-through area (111). Further disclosed is a vehicle comprising an automobile pillar assembly. By means of providing the heating unit, the see-through area can be prevented from fogging or frosting, and thus it is ensured that the camera can normally capture images.

**(Cont. next page)**

EP 4 606 650 A1

FIG. 1

**Description**

**RELATED APPLICATIONS**

This application claims priority to Chinese patent application No. 2022114525090, filed on November 21, 2022, entitled "AUTOMOBILE PILLAR ASSEMBLY AND VEHICLE", the content of which is incorporated herein by reference in its entirety.

**TECHNICAL FIELD**

The present disclosure relates to the technical field of vehicles, and in particular to an automobile pillar assembly and a vehicle.

**BACKGROUND**

With the development of the technical field of vehicles, vehicles are becoming more and more intelligent, having such as assisted driving, face recognition and surround view functions. The camera is an indispensable component for achieving these functions. After the camera collects image information outside the vehicle, recognition, judgment, and displays are performed based on the image information, thereby achieving the aforementioned functions. The camera can be specifically provided on the B-pillar, which is located in the middle of the vehicle body. The camera is arranged here so that it is convenient for the driver and passengers to use functions such as face recognition. In actual use, when the vehicle is in some complex environments, for example, encountering severe weather conditions such large temperature differences, rain, frost and the like, the camera on the B-pillar is prone to be blocked by mist or frost, affecting image capture and causing these functions that rely on the camera to fail to function properly.

**SUMMARY**

In order to solve the problem that the camera on the B-pillar cannot normally capture images in complex environments, an automobile pillar assembly and a vehicle are proposed in the present disclosure, in which heat is generated by a heating unit provided in a heating area, causing a temperature of a see-through area increases, avoiding mist or frost in the see-through area, thereby ensuring that the camera can normally capture images.
An automobile pillar assembly is provided, including:

> a trim panel having a see-through area and a heating area, wherein the see-through area is capable of transmitting light;
> a camera arranged corresponding to the see-through area, wherein the camera is capable of capturing an image located on a side of the see-through area away from the camera through the see-through area; and
> a heating unit located in the heating area, wherein heat generated by the heating unit is capable of being transferred from the heating area to the see-through area.

In one embodiment, the heating unit includes a silver paste heating wire, and the trim panel is a glass exterior trim panel. The heating area of the glass exterior trim panel is sequentially stacked with a first ink layer and a second ink layer, and the silver paste heating wire is located between the first ink layer and the second ink layer.
The automobile pillar assembly further includes a bracket connected to the trim panel, and the bracket is partially adhered to a side of the second ink layer away from the first ink layer.
In one embodiment, an adhesive unit is provided between the second ink layer and the bracket.
In one embodiment, the trim panel is a plastic exterior trim panel, the heating unit includes a heating wire and an insulating film sandwiching the heating wire, and the insulating film is adhered to the heating area on the trim panel.
In one embodiment, the trim panel is a plastic exterior trim panel, the heating unit includes a heating wire and an insulating film sandwiching the heating wire. The insulating film is integrally injection molded with the plastic exterior trim panel, and the insulating film is located in the heating area.
In one embodiment, the automobile pillar assembly further includes a bracket connected to the trim panel. The trim panel is located on an outer side of the bracket, and the heating unit is located between the trim panel and the bracket.
In one embodiment, a closed space is enclosed between the bracket and the trim panel, the see-through area belongs to a part of a side wall of the closed space, a lens of the camera is located in the closed space, a part of the bracket configured to enclose the closed space is further provided with a ventilation hole, and the automobile pillar assembly further includes a waterproof and breathable membrane shielding the ventilation hole.
In one embodiment, the heating unit includes a heating wire, the bracket is further provided with a first conductive terminal and a second conductive terminal that are electrically connected to two ends of the heating wire, respectively. An insulating sealing member is further provided at a position of the bracket where the first conductive terminal and the second conductive terminal are provided.

In one embodiment, the heating unit includes a heating wire, and the heating wire is bent and extends back and forth in the heating area.

In one embodiment, the following relationship is satisfied:

$$45°C \leq K+M+N \leq 70°C;$$

where K=20.9, M=-0.0715L+103W+0.41D, N=13.5U-5.86P-5.80Rs, L is a total length of the heating wire, W is a wire diameter of the heating wire, $R_S$ is a sheet resistance of the heating wire, D is a distance between any two adjacent wire segments formed after the heating wire is bent, U is a voltage of the heating wire, and P is a power of the heating wire, with L, W, and D in mm, P in W, U in V, and $Rs$ in milliohm/o.

In one embodiment, the total length L of the heating wire is 850 mm to 1500 mm, the wire diameter W of the heating wire is 0.4 mm to 1.0 mm, the sheet resistance of the heating wire is 3 milliohms/o to 20 milliohms/o, and the distance D between any two adjacent wire segments formed after the heating wire is bent is 4 mm to 10 mm.

A vehicle is provided, including the aforementioned automobile pillar assembly.

In one embodiment, the automobile pillar assembly further includes a wiring harness electrically connected between the heating unit and a vehicle control module.

The above solution provided an automobile pillar assembly and a vehicle. The heating unit of the heating area generates heat during operation, and the heat is transferred to the see-through area, such that the temperature of the see-through area increases, which in turn can prevent the see-through area from misting or frosting even in a complex environment, or at least can eliminate mist and frost in the see-through area, ensuring a good light transmission effect of the see-through area when the camera is capturing image. As such, the camera can capture the image on the other side of the see-through area through the see-through area, enabling proper functions relying on the camera.

## BRIEF DESCRIPTION OF THE DRAWINGS

The accompanying drawings constituting a part of the present disclosure are used to provide a further understanding of the present disclosure. The illustrative embodiments of the present disclosure and their descriptions are used to explain the present disclosure and do not constitute improper limitations on the present disclosure.

To illustrate the technical solutions according to the embodiments of the present disclosure more clearly, the accompanying drawings for describing the embodiments are introduced briefly in the following. Apparently, the accompanying drawings in the following description are only some embodiments of the present disclosure, and persons of ordinary skill in the art can derive other drawings from the accompanying drawings without creative efforts.

FIG. 1 is a rear view of an automobile pillar assembly according to an embodiment;

FIG. 2 is a cross-sectional view taken along line A-A of FIG. 1;

FIG. 3 is a partial enlarged view of the position where a heating wire is located in an automobile pillar assembly according to an embodiment;

FIG. 4 is a schematic view of a stacked structure of a trim panel, a heating unit, and a bracket in an automobile pillar assembly according to an embodiment;

FIG. 5 is a schematic view of a stacked structure of a trim panel, a heating unit, and a bracket in an automobile pillar assembly according to another embodiment;

FIG. 6 is a schematic view of a stacked structure of a trim panel, a heating unit, and a bracket in an automobile pillar assembly according to yet another embodiment.

Reference Numerals:

10, automobile pillar assembly; 11, trim panel; 111, see-through area; 112, heating area; 12, camera; 13, heating unit; 131, silver paste heating wire; 132, insulating film; 1321, inner film; 1322, outer film; 14, first ink layer; 15, second ink layer; 16, bracket; 161, adhesive unit; 162, adhesive; 163, closed space; 164, waterproof and breathable membrane; 165, first conductive terminal; 166, second conductive terminal; 167, insulating sealing member; 17, wiring harness.

## DETAILED DESCRIPTION

In order to make the above objectives, features and advantages of the present disclosure more obvious and understandable, specific embodiments of the present disclosure are described in detail below with reference to the accompanying drawings. Obviously, the described embodiments are only part of the embodiments of the present disclosure, rather than all the embodiments. In the following description, many specific details are set forth in order to fully understand the present disclosure. However, the present disclosure can be implemented in many other ways than those described herein, and those skilled in the art can make similar improvements without departing from the present disclosure. Therefore, the present disclosure is not limited to the specific embodiments disclosed below.

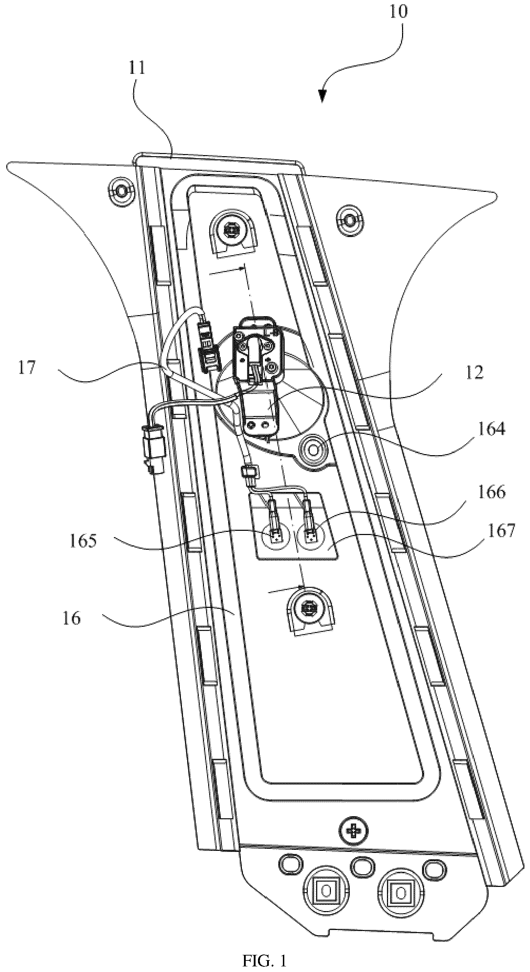

In the field of vehicles, as shown in FIGS. 1 to 3, a camera 12 can be integrated into an automobile pillar assembly 10. The camera 12 is used to collect image information outside the vehicle, such that the vehicle has functions such as face recognition or driving assistance, thereby improving intelligence of the vehicle.

The camera 12 integrated in the automobile pillar assembly 10 needs to acquire image information outside the vehicle through a trim panel 11, and the camera 12 is located on an inner side of the trim panel 11. If mist or frost appears on the trim panel 11, it will affect the ability of the camera 12 to capture images.

Accordingly, in some embodiments of the present disclosure, as shown in FIGS. 1 to 3, the automobile pillar assembly 10 is provided, including a trim panel 11, a camera 12, and a heating unit 13. The trim panel 11 has a see-through area 111 and a heating area 112, and the see-through area 111 can transmit light. The camera 12 is arranged corresponding to the see-through area 111, and the camera 12 can capture an image located on a side of the see-through area 111 away from the camera 12 through the see-through area 111. The heating unit 13 is located in the heating area 112, and heat generated by the heating unit 13 can be transferred from the heating area 12 to the see-through area 111.

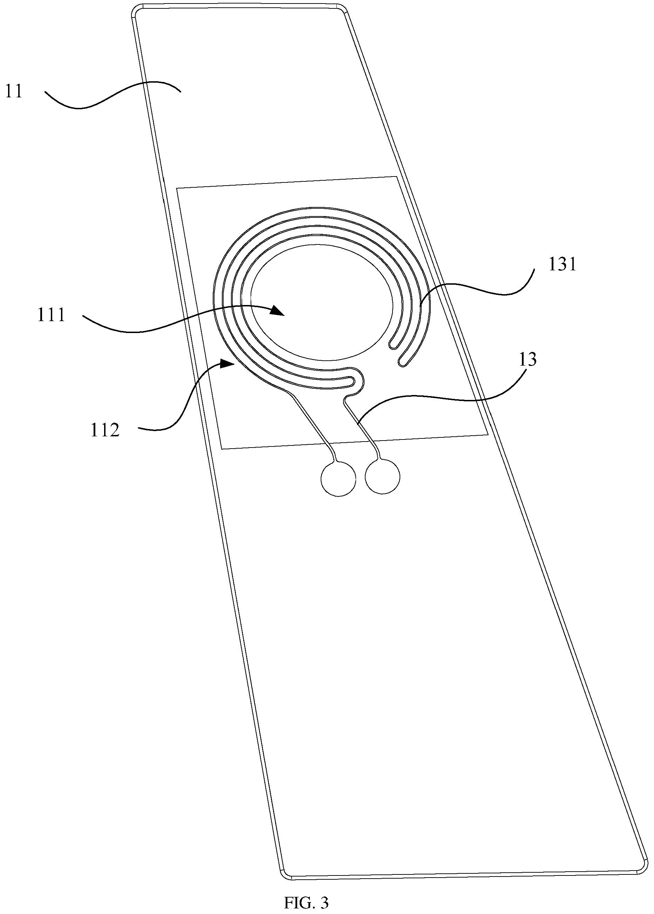

In one embodiment, as shown in FIG. 3, the heating area 112 is arranged around the see-through area 111. The heating unit 13 is arranged around the see-through area 111, and heat generated by the heating unit 13 is gradually transferred from peripheral regions toward a central area of the see-through area 111.

In use, the heating unit 13 located in the heating area 112 generates heat, and the heat is transferred to the see-through area 111, such that the temperature of the see-through area 111 increases, the problem of frost or mist in the see-through area 111 is thus solved, enabling the see-through area 111 to maintain a good light transmission effect, thereby ensuring that the camera 12 can always collect image information outside the trim panel 11.

In some embodiments, the trim panel 11 is a glass exterior trim panel, and the see-through area 111 is a partial area of the glass exterior trim panel. A first ink layer 14 is provided on the glass exterior trim panel, and the first ink layer 14 does not cover the see-through area 111, which enables the see-through area 111 to have a see-through function. The first ink layer 14 is at least partially located in the heating area 112, such that components located in an inner side of the heating area 112 cannot be observed from the outside of the vehicle. The heating unit 13 is located on the inner side of the heating area 112, and the first ink layer 14 is arranged on an inner side of the glass exterior trim panel. The heating unit 13 is arranged on the first ink layer 14 in the heating area 112, and the first ink layer 14 shields the heating unit 13 at an inner side.

The glass exterior trim panels can be made of a variety of materials. According to one or more embodiments, the glass exterior trim panel can be made of the same material or different materials. In an exemplary embodiment, the glass exterior trim panel can be made of glass (e.g., soda-lime glass, alkali aluminosilicate glass, alkali-containing borosilicate glass, and/or alkali aluminoborosilicate glass) or glass-ceramic. Examples of suitable glass-ceramics include $Li_2O$-$Al_2O_3$-$SiO_2$ system (i.e., LAS system) glass-ceramics; $MgO$-$Al_2O_3$-$SiO_2$ system (i.e., MAS system) glass-ceramics; and glass-ceramics containing a crystalline phase, the crystalline phase is any one or more of the following substances: mullite, spinel, $\alpha$-quartz, $\beta$-quartz solid solution, petalite, lithium disilicate, $\beta$-spodumene, nepheline, and alumina. Additionally, the glass exterior trim panel can be chemically strengthened, thermally strengthened, mechanically strengthened, or a combination thereof. In one or more embodiments, the glass exterior trim panel is unstrengthened (meaning it has not been strengthened by chemical, thermal, or mechanical strengthening processes, but may include annealed substrate). In one or more specific embodiments, the glass exterior trim panel is thermally strengthened.

In other embodiments, the trim panel 11 is a plastic exterior trim panel, and the see-through area 111 of the plastic exterior trim panel can transmit light and has a see-through function, through which the camera 12 can collect image information of the outside of the plastic exterior trim panel through. The heating area 112 of the plastic exterior trim panel can be of an opaque structure, which in turn can shield components on the inner side of the heating area 112.

In one embodiment, as shown in FIG. 3, the heating unit 13 includes a silver paste heating wire 131 distributed in the heating area 112. The silver paste heating wire 131 is located on the inner side of the heating area 112. In other embodiments, the heating unit 13 can further include other devices that can generate heat, which is not specifically limited here.

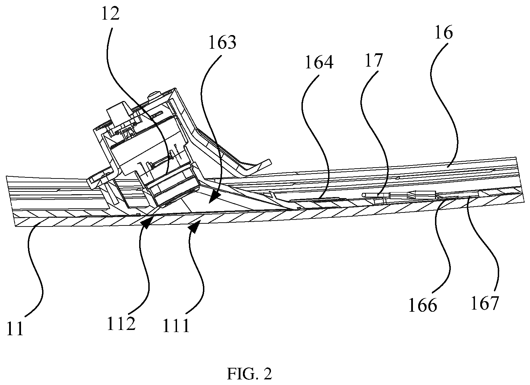

In one embodiment, as shown in FIGS. 2 to 6, the heating unit 13 includes a silver paste heating wire 131, the trim panel 11 is a glass exterior trim panel. The heating area 112 of the glass exterior trim panel is sequentially stacked with a first ink layer 14 and a second ink layer 15, and the silver paste heating wire 131 is located between the first ink layer 14 and the second ink layer 15. The silver paste heating wire 131 is fixed to the heating area 112 of the glass exterior trim panel by the two ink layers. The first ink layer 14 is sintered on the inner side of the glass exterior trim panel, the second ink layer 15 is printed on a side of the first ink layer 14 away from the heating area 112, and the silver paste heating wire 131 is located between the two ink layers.

In the present disclosure, an outer side of a component refers to a side where the space outside the vehicle is located, and an inner side refers to a side where the space inside the vehicle is located. The first ink layer 14 mainly plays a shielding function; the second ink layer 15 functions to protect the silver paste heating wire 131, so as to prevent the silver paste heating wire 131 from being exposed and being contaminated by dust and water vapor.

Furthermore, as shown in FIGS. 1 and 2, the automobile pillar assembly 10 further includes a bracket 16 connected to the trim panel 11. The bracket 16 is partially adhered to a side of the second ink layer 15 away from the first ink layer 14.

When the bracket 16 and the trim panel 11 are kept in a fixed relative position by adhering, the second ink layer 15 is isolated between the silver paste heating wire 131 and an adhesive, so as to prevent the silver paste heating wire 131 from reacting with the adhesive.

For example, in one embodiment, an adhesive unit 161 is provided between the second ink layer 15 and the bracket 16. The adhesive unit 161 can be an adhesive tape such as PU adhesive (also known as polyurethane resin) or foam double-sided tape. The bracket 16 is adhered to the side of the second ink layer 15 away from the glass exterior trim panel by PU adhesive. The second ink layer 15 isolates the silver paste heating wire 131 from the PU adhesive to prevent the silver paste heating wire 131 from contacting and reacting with the PU adhesive.

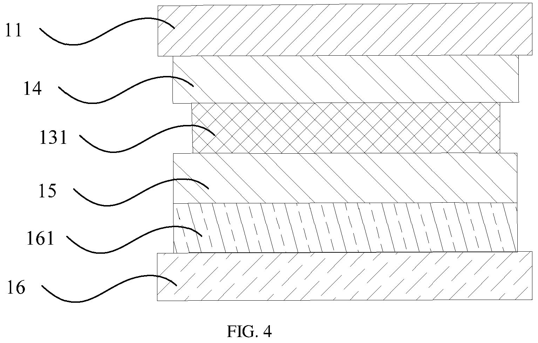

As shown in FIG. 4, in one embodiment, the first ink layer 14 is provided on the inner side of the heating area 112 of the glass exterior trim panel, the second ink layer 15 is printed on the side of the first ink layer 14 away from the heating area 112, and the silver paste heating wire 131 is located between the two ink layers. The bracket 16 is at least partially located on the side of the second ink layer 15 away from the first ink layer 14, and the adhesive unit 161 is provided between the bracket 16 and the second ink layer 15.

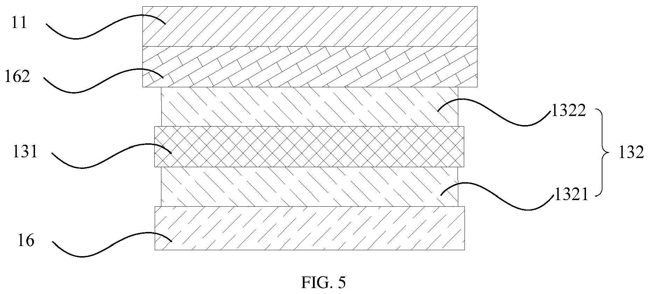

As shown in FIG. 5, in another embodiment, the trim panel 11 is a plastic exterior trim panel, and the heating unit 13 includes a heating wire and an insulating film 132 sandwiching the heating wire, and the insulating film 132 is located in the heating area 112. The insulating film 132 is adhered to the heating area 112 on the trim panel 11. An adhesive 162 is provided between the insulating film 132 and the trim panel 11.

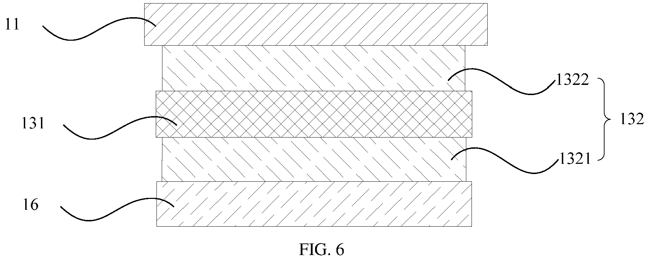

Alternatively, as shown in FIG. 6, in another embodiment, the trim panel 11 is a plastic exterior trim panel, the heating unit 13 includes a heating wire and an insulating film 132 sandwiching the heating wire. The insulating film 132 is integrally injection molded with the plastic exterior trim panel, and the insulating film 132 is located in the heating area 112.

In other words, when the trim panel 11 is a plastic exterior trim panel, the insulating film 132 can be connected to the plastic exterior trim panel by adhering or integral injection molding, such that the heating wire can be located in the heating area 112 of the plastic exterior trim panel.

As shown in FIGS. 5 and 6, the insulating film 132 includes an inner film 1321 and an outer film 1322 that are stacked, and the heating wire is located between the inner film 1321 and the outer film 1322. The outer film 1322 is adhered to the plastic exterior trim panel or integrally injection-molded therewith.

Furthermore, as shown in FIGS. 5 and 6, the bracket 16 is partially located on a side of the insulating film 132 away from the plastic exterior trim panel, the insulating film 132 is located on the inner side of the heating area 112, and the insulating film 132 and the heating wire are fixed between the bracket 16 and the plastic exterior trim panel. The inner film 1321 is located between the outer film 1322 and the bracket 16.

In the present disclosure, the heating wire can be a silver paste heating wire 131. In some embodiments, the silver paste heating wire 131 is sandwiched inside the insulating film 132.

Furthermore, in some embodiments, as shown in FIGS. 1 and 2, the trim panel 11 is located on an outer side of the bracket 16, and the heating unit 13 is located between the trim panel 11 and the bracket 16.

As shown in FIG. 2, a closed space 163 is enclosed between the bracket 16 and the trim panel 11, the see-through area 111 belongs to a part of a side wall of the closed space 163, and a lens of the camera 12 is located in the closed space 163.

A part of the bracket 16 is tightly connected to the trim panel 11, and another part of the bracket 16 protrudes away from the trim panel 11, thereby forming the closed space 163 between the bracket 16 and the trim panel 11.

In some embodiments, a part of the heating area 112 also belongs to a part of the side wall of the closed space 163. Assuming that the heating area 112 is an annular area and the see-through area 111 is an area enclosed by the annular area, parts of the see-through area 111 and the heating area 112 adjacent to an inner circle both belong to parts of the side wall of the closed space 163, and a periphery part of the heating area 112 is tightly connected to the bracket 16.

Furthermore, as shown in FIGS. 1 and 2, the part of the bracket 16 used to enclose the closed space 163 is further provided with a ventilation hole (not shown), and the automobile pillar assembly 10 further includes a waterproof and breathable membrane 164 shielding the ventilation hole. Air can enter the closed space 163 through the waterproof and breathable membrane 164, while moisture is blocked outside the closed space 163, which further prevents the see-through area 111 from misting.

In addition, when heat is generated by the heating unit 13, the temperature of gas in the space where it belongs increases and the volume increases. The waterproof and breathable membrane 164 can maintain a balance of internal and external air pressure, thereby further ensuring the reliability of the tight connection between the trim panel 11 and the bracket 16.

In one embodiment, as shown in FIGS. 1 and 2, the heating unit 13 includes a heating wire. The bracket 16 is further provided with a first conductive terminal 165 and a second conductive terminal 166 that are electrically connected to two ends of the heating wire, respectively. The first conductive terminal 165 and the second conductive terminal 166 are used to be connected to an external circuit, such that the heating wire can be powered on and in operation.

In addition, an insulating sealing member 167 is provided at a position of the bracket 16 where the first conductive terminal 165 and the second conductive terminal 166 are provided, which plays an insulating protection role and prevents the first conductive terminal 165 and the second conductive terminal 166 from short-circuiting.

In some embodiments, as shown in FIG. 3, the heating wire is bent and extends back and forth in the heating area 112, such that each part of the heating area 112 is heated evenly as much as possible, and heat can be diffused inward from the periphery of the see-through area 111 in a relatively even manner.

The trim panel 11 can be directly touched from outside the vehicle. When heat is generated by the heating unit 13, an excessive temperature of the see-through area 111 should be avoided to prevent burns. In some embodiments, it is further limited that a total length L of the heating wire, a wire diameter W of the heating wire, a square resistance $R_S$ of the heating wire, a distance D between any two adjacent wire segments formed after the heating wire is bent, a voltage U on the heating wire, and a power P of the heating wire satisfy the following relationship:

$$45°C \leq K+M+N \leq 70°C;$$

where K=20.9, M=-0.0715L+103W+0.41D, N=13.5U-5.86P-5.80Rs, $P = \dfrac{U^2}{R}$ , $R = R_S \times \dfrac{L}{W}$, with L, W, and D in mm, P in W, U in V, and $R_S$ in milliohm/o.

When the heating wire satisfying the above formula 45°C≤K+M+N≤70°C is in operation, a maximum temperature of the trim panel 11 is between 45°C and 70°C, which can not only achieve the effect of defrosting and defogging, but also avoid burns.

The total length L of the heating wire is 850 mm to 1500 mm, the wire diameter W of the heating wire is 0.4 mm to 1.0 mm, the sheet resistance $R_S$ of the heating wire is 3 milliohms/o to 20 milliohms/o, and the distance D between any two adjacent wire segments formed after the heating wire is bent is 4 mm to 10 mm.

When an input voltage U of the heating wire is 10V to 24V, limiting the parameters of the heating wire to the above ranges can ensure that the temperature of the see-through area 111 is maintained between 45°C to 70°C.

For example, in one embodiment, the heating wire is the silver paste heating wire 131, the total length L of the heating wire is 1013 mm, the wire diameter W of the heating wire is 0.5 mm, and the distance D between any two adjacent wire segments formed after the heating wire is bent is 4 mm. The Comparative Examples and Example 1 in the following "Heating Test Data Sheet" reflect the temperature changes when the total length L of the heating wire, the wire diameter W of the heating wire, and the distance D between two adjacent wire segments change, and the voltage and the constant heating wire material are constant.

Heating Test Data Sheet

|  | L (mm) | W (mm) | D (mm) | P (W) | U (V) | *Rs* (milliohms/□) | Temperature °C |
|---|---|---|---|---|---|---|---|
| Example 1 | 1014 | 0.5 | 4 | 6.2 | 15 | 17.89 | 63.9 |
| Example 2 | 1180 | 0.5 | 4 | 6.77 | 12 | 9.01 | 59.7 |
| Example 3 | 938 | 0.5 | 4 | 7.08 | 12 | 10.84 | 64.6 |
| Example 4 | 1148 | 0.5 | 5 | 13.4 | 13.8 | 6.19 | 64.2 |
| Example 5 | 975 | 0.5 | 6 | 13 | 12.5 | 6.16 | 61.9 |
| Example 6 | 1190 | 0.6 | 6 | 15 | 13.8 | 6.40 | 61.3 |
| Comparative Example 1 | 839 | 0.5 | 4 | 8.3 | 15 | 16.16 | 74.2 |
| Comparative Example 2 | 1014 | 0.5 | 3 | 6.9 | 15 | 16.00 | 70.4 |
| Comparative Example 3 | 1014 | 1.2 | 4 | 16.6 | 15 | 16.04 | 85.8 |

It can be seen from the comparison between Comparative Example 1 and Example 1 in the above table that if the total length L of the heating wire is too small, the power will be too large, causing a peak temperature of the heating area 112 to exceed 70°C. It can be seen from the comparison between Comparative Example 2 and Example 1 that if the distance D between any two wire segments after the heating wire is bent back and forth is too small, heat will accumulation, causing the peak temperature of the heating area 112 to exceed 70°C. It can be seen from the comparison between Comparative Example 3 and Example 1 that if the diameter W of the heating wire is too large, the resistance will be small and the power will be too large, causing the peak temperature of the heating area 112 to exceed 70°C.

For temperature measurement, specific heating temperature can be measured after 30 minutes of power under normal temperature environment.

Furthermore, in some embodiments, a vehicle is provided, including the aforementioned automobile pillar assembly 10. The heating unit 13 of the heating area 112 of the automobile pillar assembly 10 generates heat during operation, and the heat is transferred to the see-through area 111, such that the temperature of the see-through area 111 increases, and mist or frost in the see-through area 111 are thus avoided even in a complex environment, ensuring a good light transmission effect of the see-through area 111. As such, the camera 12 can capture the image on the other side of the see-through area 111 through the see-through area 111, enabling proper functions relying on the camera 12.

In some other embodiments, as shown in FIGS. 1 and 2, the automobile pillar assembly 10 further includes a wiring harness 17 electrically connected between the heating unit 13 and a vehicle control module. The operation of the heating unit 13 can be automatically control through the vehicle control module.

In one embodiment, the first conductive terminal 165 and the second conductive terminal 166 are both connected to one end of the wiring harness 17, and the other end of the wiring harness 17 is electrically connected to the vehicle control module.

In the description of the present disclosure, it should be understood that orientation or position relationships that are indicated by the terms "inner side", "outer side", and the like are orientation or position relationships shown based on the accompany drawings, and are merely for convenience of the description of the present disclosure and simplifying description, rather than indicating or implying that the indicated device or element must have a particular orientation or being constructed and operated in a particular orientation, and are therefore should not be constructed as limitation of the present disclosure.

In addition, the terms "first" and "second" are used for descriptive purposes only, which cannot be constructed as indicating or implying a relative importance, or implicitly specifying the number of the indicated technical features. Therefore, the features defined with "first" and "second" may explicitly or implicitly include at least one of the features.

It should be noted that, when an element is referred to as being "fixed to" or "disposed on" another element, the element may be directly on another element or there may be an intermediate element therebetween. When an element is referred to as "connected to" another element, the element may be directly connected to another element or there may be an intermediate element therebetween.

Each of the technical features of the aforementioned embodiments can be combined arbitrarily. To simplify the description, not all the possible combinations of the technical features in the aforementioned embodiments are described. However, all of the combinations of these technical features should be considered as within the scope of the present disclosure, as long as such combinations do not contradict with each other.

The aforementioned embodiments merely represent several embodiments of the present disclosure, and the description thereof is specific and detailed, but it should not be constructed as limiting the scope of the present disclosure. It should be noted that a plurality of variations and modifications may be made by those skilled in the art without departing from the conception of the present disclosure, which are all within the protection scope of the present disclosure. Therefore, the protection scope of the present disclosure shall be subject to the appended claims.

**Claims**

**1.** An automobile pillar assembly, comprising:

a trim panel having a see-through area and a heating area, wherein the see-through area is capable of transmitting light;
a camera arranged corresponding to the see-through area, wherein the camera is capable of capturing an image located on a side of the see-through area away from the camera through the see-through area; and
a heating unit located in the heating area, wherein heat generated by the heating unit is capable of being transferred from the heating area to the see-through area.

**2.** The automobile pillar assembly according to claim 1, wherein the heating unit comprises a silver paste heating wire, the trim panel is a glass exterior trim panel, the heating area of the glass exterior trim panel is sequentially stacked with a first ink layer and a second ink layer, and the silver paste heating wire is located between the first ink layer and the second ink layer;

wherein the automobile pillar assembly further comprises a bracket connected to the trim panel, and the bracket is partially adhered to a side of the second ink layer away from the first ink layer.

3.   The automobile pillar assembly according to claim 2, wherein an adhesive unit is provided between the second ink layer and the bracket.

4.   The automobile pillar assembly according to claim 1, wherein the trim panel is a plastic exterior trim panel, the heating unit comprises a heating wire and an insulating film sandwiching the heating wire, and the insulating film is adhered to the heating area on the trim panel.

5.   The automobile pillar assembly according to claim 1, wherein the trim panel is a plastic exterior trim panel, the heating unit comprises a heating wire and an insulating film sandwiching the heating wire, the insulating film is integrally injection molded with the plastic exterior trim panel, and the insulating film is located in the heating area.

6.   The automobile pillar assembly according to claim 1, further comprising a bracket connected to the trim panel, wherein the trim panel is located on an outer side of the bracket, and the heating unit is located between the trim panel and the bracket.

7.   The automobile pillar assembly according to claim 6, wherein a closed space is enclosed between the bracket and the trim panel, the see-through area belongs to a part of a side wall of the closed space, a lens of the camera is located in the closed space, a part of the bracket configured to enclose the closed space is further provided with a ventilation hole, and the automobile pillar assembly further comprises a waterproof and breathable membrane shielding the ventilation hole.

8.   The automobile pillar assembly according to claim 6, wherein the heating unit comprises a heating wire, the bracket is further provided with a first conductive terminal and a second conductive terminal that are electrically connected to two ends of the heating wire, respectively, and an insulating sealing member is further provided at a position of the bracket where the first conductive terminal and the second conductive terminal are provided.

9.   The automobile pillar assembly according to any one of claims 1 to 3, wherein the heating unit comprises a heating wire, and the heating wire is bent and extends back and forth in the heating area.

10.   The automobile pillar assembly according to claim 9, satisfying the following relationship:

$$45°C \leq K+M+N \leq 70°C;$$

wherein K=20.9, M=-0.0715L+103W+0.41D, N=13.5U-5.86P-5.80Rs, L is a total length of the heating wire, W is a wire diameter of the heating wire, $R_S$ is a sheet resistance of the heating wire, D is a distance between any two adjacent wire segments formed after the heating wire is bent, U is a voltage of the heating wire, and P is a power of the heating wire, with L, W, and D in mm, P in W, U in V, and $R_S$ in milliohm/o.

11.   The automobile pillar assembly according to claim 10, wherein the total length L of the heating wire is 850 mm to 1500 mm, the wire diameter W of the heating wire is 0.4 mm to 1.0 mm, the sheet resistance of the heating wire is 3 milliohms/o to 20 milliohms/o, and the distance D between any two adjacent wire segments formed after the heating wire is bent is 4 mm to 10 mm.

12.   A vehicle, comprising the automobile pillar assembly according to any one of claims 1 to 11.

13.   The vehicle according to claim 12, wherein the automobile pillar assembly further comprises a wiring harness electrically connected between the heating unit and a vehicle control module.

FIG. 1

FIG. 2

FIG. 3

11

14

131

15

161

16

FIG. 4

11

162

1322

131

132

1321

16

FIG. 5

11

131

16

1322

1321

} 132

FIG. 6

## INTERNATIONAL SEARCH REPORT

| International application No. |
| --- |
| **PCT/CN2023/074962** |

| A. | CLASSIFICATION OF SUBJECT MATTER |
| --- | --- |

B60R11/04(2006.01)i; H05B3/86(2006.01)i; B60R13/02(2006.01)i; H04N23/50(2023.01)i

According to International Patent Classification (IPC) or to both national classification and IPC

| B. | FIELDS SEARCHED |
| --- | --- |

Minimum documentation searched (classification system followed by classification symbols)

IPC: B60R,H05B,H04N

Documentation searched other than minimum documentation to the extent that such documents are included in the fields searched

Electronic data base consulted during the international search (name of data base and, where practicable, search terms used)

CNTXT, CNKI, ENTXTC, WPABS: 饰板, 透视, 透光, 加热, 支架, cladding, decoration, trim, plate, element, component, light, perspective, transmit+, heat+, bracket

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 114291036 A (HEBEI KELI AUTOMOBILE EQUIPMENT CO., LTD.) 08 April 2022 (2022-04-08)<br>description, paragraphs [0032]-[0047], and figures 1-3 | 1-13 |
| Y | CN 217514940 U (SHENZHEN XINYI AUTOMOBILE GLASS CO., LTD.) 30 September 2022 (2022-09-30)<br>description, paragraphs [0030]-[0045], and figures 1-3 | 1-13 |
| Y | CN 112208310 A (FUYAO GLASS INDUSTRY GROUP CO., LTD.) 12 January 2021 (2021-01-12)<br>description, paragraphs [0034]-[0045], and figures 1-6 | 2-3, 6-8 |
| A | CN 216508215 U (HEBEI KELI AUTOMOBILE EQUIPMENT CO., LTD.) 13 May 2022 (2022-05-13)<br>entire document | 1-13 |
| A | CN 217197260 U (GUANGZHOU XIAOPENG AUTOPILOT TECHNOLOGY CO., LTD.) 16 August 2022 (2022-08-16)<br>entire document | 1-13 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 July 2023** | **07 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/074962** |

| C. | DOCUMENTS CONSIDERED TO BE RELEVANT | |
|---|---|---|
| Category* | Citation of document, with indication, where appropriate, of the relevant passages | Relevant to claim No. |
| A | DE 102009019216 A1 (DAIMLER AG) 21 January 2010 (2010-01-21)<br>entire document | 1-13 |
| A | WO 2021032599 A1 (WEBASTO SE) 25 February 2021 (2021-02-25)<br>entire document | 1-13 |

Form PCT/ISA/210 (second sheet) (July 2022)

**INTERNATIONAL SEARCH REPORT**
Information on patent family members

International application No.

**PCT/CN2023/074962**

| Patent document cited in search report | | | Publication date (day/month/year) | Patent family member(s) | | | Publication date (day/month/year) |
|---|---|---|---|---|---|---|---|
| CN | 114291036 | A | 08 April 2022 | None | | | |
| CN | 217514940 | U | 30 September 2022 | None | | | |
| CN | 112208310 | A | 12 January 2021 | None | | | |
| CN | 216508215 | U | 13 May 2022 | None | | | |
| CN | 217197260 | U | 16 August 2022 | None | | | |
| DE | 102009019216 | A1 | 21 January 2010 | None | | | |
| WO | 2021032599 | A1 | 25 February 2021 | DE | 102019122221 | A1 | 25 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022114525090